# EUROPÄISCHE PATENTSCHRIFT

(11) **EP 3 074 260 B1**
(45) Veröffentlichungstag und Bekanntmachung des Hinweises auf die Patenterteilung: **20.01.2021**
(21) Anmeldenummer: 14795960.5
(22) Anmeldetag: 11.11.2014
(51) Int. Cl.: B60K 17/16, F16H 48/36

(54) **AKTIVES DIFFERENTIAL UND KRAFTFAHRZEUG**
ACTIVE DIFFERENTIAL AND MOTOR VEHICLE
DIFFÉRENTIEL ACTIF ET VÉHICULE AUTOMOBILE

(30) Priorität: 28.11.2013 DE 102013019907
(43) Veröffentlichungstag der Anmeldung: 05.10.2016
(73) Patentinhaber: Audi AG, 85045 Ingolstadt (DE)
(72) Erfinder: PINSCHMIDT, Udo, 85080 Gaimersheim (DE); SCHELS, Thomas, 85110 Kipfenberg-Schelldorf (DE); WOLF, Maximilian, 85051 Ingolstadt (DE)
(86) Internationale Anmeldenummer: PCT/EP2014/003019
(87) Internationale Veröffentlichungsnummer: WO 2015/078558

(56) Entgegenhaltungen:
- EP-A1- 2 946 963
- WO-A1-2010/101506
- US-A1- 2004 220 011

## Beschreibung

Die Erfindung betrifft ein aktives Differential zur gesteuerten Verteilung eines durch einen Antriebsmotor erzeugten Antriebsmoments auf zwei Abtriebswellen, umfassend ein Planetengetriebe zur Kopplung der Abtriebswellen mit einer Antriebswelle des Antriebsmotors und einer Verteilwelle eines Verteilmotors, wobei die Verteilung des Antriebsmoments auf die Abtriebswellen abhängig von einem durch den Verteilmotor ausgeübten Drehmoment ist, wobei die Verteilwelle und das Planetengetriebe durch eine trennbare Kupplungseinrichtung gekoppelt sind, wobei die Kupplungseinrichtung ausgebildet ist, bei Überschreiten eines vorgegebenen Grenzwertes durch einen Betriebsparameter des Differentials die Verteilwelle von dem Planetengetriebe zu trennen.

Aktive Differentiale werden benutzt um Antriebsmomente auf mehrere, insbesondere zwei, Abtriebswellen zu verteilen. Das Differential ermöglicht es dabei, dass die zwei Abtriebswellen verschiedene Drehgeschwindigkeiten aufweisen. Wird das Differential ohne einen zusätzlichen Verteilmotor oder ein vollständiges oder teilweises Sperren des Differentials betrieben, so werden auf beide Abtriebswellen die gleichen Drehmomente übertragen. Ein aktives Eingreifen in ein Differential, das in Abhängigkeit eines weiteren eingebrachten Drehmoments die Drehmomentverteilung auf die Abtriebswellen ändert, erlaubt eine flexible Verteilung von Drehmomenten.

Aktive Differentiale werden insbesondere in Kraftfahrzeugen zur Verteilung des Antriebsmoments eines Antriebsmotors auf die anzutreibenden Räder des Kraftfahrzeugs genutzt. Im Kraftfahrzeugsegment wird die Nutzung eines solchen aktiven Differentials häufig als "torque vectoring" oder "active yaw" bezeichnet. Die Nutzung eines aktiven Differentials im Kraftfahrzeug erlaubt insbesondere eine aktive Beeinflussung des Gierwinkels des Kraftfahrzeugs, da durch das aktive Differential die Drehmomente an den einzelnen Rädern und damit die am jeweiligen Rad auf die Straße übertragenden Kräfte separat gesteuert bzw. angepasst werden können.

Insbesondere bei Nutzung eines aktiven Differentials in einem Kraftfahrzeug ist es möglich, dass hohe Belastungen im Differential auftreten. Solche hohen Belastungen können insbesondere auftreten, wenn die Drehzahlen der Abtriebswellen stark unterschiedlich sind oder stark unterschiedliche Drehmomente über die Abtriebswellen auf das Differential wirken. Es ist auch möglich, dass aufgrund von verschiedenen Reaktionszeiten verschiedener Fahrzeugsysteme ein großes Drehmoment von einem Antriebsmotor auf die Räder übertragen wird, während diese Räder gebremst werden. Auch in diesem Fall wird das aktive Differential stark belastet. Aufgrund dieser hohen Belastungen können sowohl die Lebenszeiten der mechanischen Elemente des Differentials als auch die Lebenszeiten von Leistungselektronikbauteilen im aktiven Differential reduziert werden.

Die Druckschrift WO 2010/101506 A1 offenbart ein Fahrzeug mit einem Differential, wobei mit Hilfe eines mit dem Differential gekoppelten Elektromotors eine Momentverteilung zwischen zwei Abtriebswellen verändert werden kann. Der Elektromotor kann in Abhängigkeit vom Fahrzeugzustand bzw. dann, wenn die Drehgeschwindigkeit der Kupplung einen Grenzwert überschreitet, vom Differential entkoppelt werden.

Der Erfindung liegt damit die Aufgabe zugrunde, ein aktives Differential anzugeben, das es ermöglicht, die Belastungen der elektrischen und mechanischen Komponenten des aktiven Differentials zu reduzieren und damit insbesondere die Lebenszeit der Komponenten zu verlängern.

Die Aufgabe wird erfindungsgemäß durch ein Differential der eingangs genannten Art gelöst, wobei der Betriebsparameter eine Abtriebsmomentdifferenz zwischen den von den Abtriebswellen auf das Planetengetriebe übertragenen Drehmomenten oder eine zeitliche Ableitung der besagten Abtriebsmomentdifferenz ist.

Der Erfindung liegt die Idee zugrunde, Beschädigungen und hohe Belastungen des Getriebes dadurch zu vermeiden, dass bei Überschreiten gewisser Grenzwerte durch einen Betriebsparameter die Verteilwelle vom Planetengetriebe getrennt wird. Damit wird die aktive Steuerung des Differentials aufgegeben und das Differential verteilt, wenn keine zusätzlichen Elemente zur vollständigen oder teilweisen Sperrung des Differentials vorgesehen sind, das Drehmoment des Antriebsmotors gleichmäßig auf die Abtriebswellen. Eine Trennung der Verteilwelle vom Planetengetriebe ist insbesondere vorteilhaft, da die Verteilwelle bzw. der Verteilmotor typischerweise mit hohen Drehzahlen betrieben wird, das heißt, das Planetengetriebe oder ein weiteres Getriebe derart ausgebildet ist, dass die Drehzahl der Verteilwelle während des Betriebs des aktiven Differentials um einen vorgegebenen Faktor höher ist als der Drehzahlunterschied zwischen den Abtriebswellen. Damit können insbesondere bei plötzlich auftretenden großen Drehzahlunterschieden zwischen den Abtriebswellen sehr hohe Drehzahlen der Verteilwelle und damit des Verteilmotors auftreten, was zu einer Beschädigung des Verteilmotors führen kann. Dies kann durch eine rechtzeitige Trennung der Verteilwelle und damit des Verteilmotors von dem Planetengetriebe vermieden werden. Ebenso können, insbesondere plötzlich auftretende hohe Drehmomentbelastungen der Verteilwelle und damit des Verteilmotors vermieden werden.

Es ist dabei möglich, dass die Kupplungseinrichtung derart ausgebildet ist, dass allein aufgrund eines mechanischen Aufbaus der Kupplungseinrichtung die Verbindung zwischen Verteilwelle und Planetengetriebe beim Überschreiten des Betriebsparameters getrennt wird. Hierzu können bekannte Kupplungsarten, die eine Kupplung zwischen zwei Wellen drehzahl- oder drehmomentabhängig verbinden und/oder trennen, genutzt werden. Alternativ oder ergänzend ist es jedoch auch möglich, den Betriebsparameter durch Sensoren, auswerten der Ströme am Verteilmotor oder Ähnliches zu ermitteln und durch eine Steuereinrichtung die Kupplungseinrichtung in Abhängigkeit dieses ermittelten Betriebsparameters zu steuern.

Der Betriebsparameter kann in einer nicht erfindungsgemäßen Alternative eine Drehzahldifferenz zwischen den Drehzahlen der Abtriebswellen sein. Die Drehzahl der Verteilwelle und damit typischerweise die Drehzahl des Verteilmotors entspricht der mit einem Übersetzungsfaktor skalierten Differenz der Drehzahlen zwischen den Abtriebswellen. Um durch relativ kompakte Verteilmotoren große Drehmomentunterschiede zwischen den Abtriebswellen zu erreichen, sind das Planetengetriebe bzw. weitere Getriebe typischerweise so ausgebildet, dass der Übersetzungsfaktor relativ groß ist, das heißt die Verteilwelle weit größere Drehzahlen aufweist als der Unterschied zwischen den Drehzahlen der Abtriebswellen. Wird das Differential nun beispielsweise im Kraftfahrzeug genutzt und verliert ein Rad die Traktion, beispielsweise durch ein Abheben des Rades oder durch eine plötzliche Reibwertänderung, so ist es möglich, dass aufgrund der vorgegebenen Drehmomentübertragung auf die Abtriebsachsen und unter Umständen durch die Art der Regelung des Antriebsmotors die Drehzahl dieses Rades und damit der Abtriebswelle kurzfristig stark erhöht wird. In diesem Fall wird der Drehzahlunterschied zwischen den Abtriebswellen und damit die Drehzahl der Verteilwelle sehr groß. Wird eine maximale Drehzahl des Verteilmotors, die bei typischen Elektromotoren im Bereich von typischerweise 10.000 bis 15.000 Umdrehungen pro Minute liegt, überschritten, kann bereits nach relativ kurzer Zeit eine Beschädigung des Verteilmotors auftreten. Zudem ist es möglich, dass durch die große Drehzahl hohe Ströme im Verteilmotor induziert werden, die abgeführt werden müssen. Dies belastet die Leistungselektronikteile des aktiven Differentials stark. Ein Eingriff durch Steuerung des Antriebsmotors und/oder des Verteilmotors kann nur mit einer relativ großen Ansprechzeit erfolgen, da Motoren eine gewisse Trägheit aufweisen. Daher kann ein solcher Regeleingriff häufig nicht ausreichen, um starke Belastungen des aktiven Differentials zu vermeiden und eine erfindungsgemäße Trennung der Verteilwelle von dem Planetengetriebe durch die Kupplungseinrichtung ist vorteilhaft.

Wie erwähnt können langsame Änderungen der Drehzahldifferenz in vielen Fällen durch eine Steuerung des Antriebsmotors bzw. des Verteilmotors kompensiert werden. Daher ist es in einer nicht erfindungsgemäßen Alternative möglich, dass der Betriebsparameter eine zeitliche Ableitung einer Drehzahldifferenz zwischen den Drehzahlen der Abtriebswellen ist. Die erfindungsgemäße Trennung von Verteilwelle und Planetengetriebe durch die Kupplungseinrichtung erfolgt in diesem Fall, wenn die zeitliche Ableitung der Drehzahldifferenz einen vorgegebenen Grenzwert übersteigt. Die zeitliche Ableitung der Drehzahldifferenz kann insbesondere ermittelt werden, indem die Drehzahldifferenz selbst bzw. die Drehzahl der Verteilwelle periodisch erfasst wird und das periodisch erfasste Signal abgeleitet wird. Die Zeitableitung eines periodisch erfassten Signals ist es beispielsweise möglich, indem zeitlich aufeinander folgende Messwerte voneinander abgezogen werden.

Der Betriebsparameter kann auch eine Abtriebsmomentdifferenz zwischen den von den Abtriebswellen auf das Planetengetriebe übertragenen Drehmomenten sein. Bei Auftreten von großen Abtriebsmomentdifferenzen müssen diese Abtriebsmomentdifferenzen durch den entsprechend übersetzten Verteilmotor aufgebracht werden. Dies kann zu einer hohen Belastung des Verteilmotors führen und soll daher vermieden werden. Hohe Abtriebsmomentdifferenzen können bei einer Nutzung des Differentials in einem Kraftfahrzeugs beispielsweise auftreten, wenn eine aufgrund eines Reibwertunterschieds hochdrehende Achse durch ein anderes Fahrzeugsystem gebremst wird. Auch bei hochdynamischen Drehzahländerungen zwischen den Rädern einer Achse können hohe Abtriebsmomentdifferenzen auftreten. Daher ist es vorteilhaft bei überschreiten eines vorgegebenen Grenzwertes durch eine Abtriebsmomentdifferenz erfindungsgemäß die Verteilwelle vom Planetengetriebe zu trennen.

Auch Abtriebsmomentdifferenzen sind besonders dann kaum durch weitere Fahrzeugsysteme zu kompensieren, wenn sie plötzlich auftreten. Daher ist es auch möglich, dass der Betriebsparameter eine zeitliche Ableitung einer Abtriebsmomentdifferenz zwischen den von den Abtriebswellen auf das Planetengetriebe übertragenen Drehmomenten ist. In diesem Fall ist es vorteilhaft, die Abtriebsmomentdifferenz durch einen Sensor zu erfassen und das Sensorsignal, wie oben beschrieben, abzuleiten.

Wie eingangs erwähnt ist es möglich, dass die erfindungsgemäße Funktion der Trennung von Verteilwelle und Planetengetriebe allein durch eine mechanische Ausbildung der Kupplungseinrichtung erreicht wird. Vorteilhaft umfasst das Differential jedoch einen Sensor zur Erfassung des Parameters und eine Steuereinrichtung, wobei die Kupplungseinrichtung in Abhängigkeit des erfassten Parameters durch die Steuereinrichtung zur Trennung und Verbindung der Kopplung zwischen der Verteilwelle und dem Planetengetriebe steuerbar ist. Durch die Auswertung des Parameters durch eine Steuereinrichtung kann insbesondere der zeitliche Verlauf des Parameters berücksichtigt werden. So ist es wie bereits erläutert möglich, die Ableitungen von Parametern mit einem Grenzwert zu vergleichen. Alternativ oder ergänzend ist es bei einer Steuerung der Kupplungseinrichtung durch die Steuereinrichtung auch besonders einfach möglich, mehrere Parameter zu überwachen. So können beispielsweise durch separate Sensoren die Drehzahldifferenz und die Abtriebsmomentdifferenz überwacht werden. Dies kann beispielsweise durch einen Drehmomentsensor und einen Drehzahlsensor an der Verteilwelle erfolgen. Sind nun in der Steuereinrichtung separate Grenzwerte für die Drehzahldifferenz, die zeitliche Ableitung der Drehzahldifferenz, die Abtriebsmomentdifferenz und/oder die zeitliche Ableitung der Abtriebsmomentdifferenz hinterlegt, kann bei Überschreiten wenigstens eines dieser Grenzwerte die Kopplung zwischen Verteilwelle und Planetengetriebe getrennt werden. Durch die Nutzung einer steuerbaren Kupplungseinrichtung und die Erfassung des Parameters über ein oder mehrere Sensoren ist also eine besonders einfache Berücksichtigung mehrerer Betriebsparameter möglich.

Dabei kann die Kupplungseinrichtung eine Magnetkupplung sein oder eine Magnetkupplung umfassen, wobei wenigstens ein Magnet der Magnetkupplung durch die Steuereinrichtung in Abhängigkeit des erfassten Parameters steuerbar ist. Magnetkupplungen sind steuerbar, indem die Position einer Scheibe oder die Anordnung von einem magnetischen Pulver oder einem Magnetofluid durch Schalten eines Magneten verändert wird, so dass, abhängig von der Schaltung des Elektromagneten, die Kupplung die Verteilwelle und das Planetengetriebe verbindet oder trennt. Durch Nutzung einer Magnetkupplung kann eine besonders einfach ausgebildete elektrisch steuerbare Kupplungseinrichtung gebildet werden.

Alternativ kann die Kupplungseinrichtung wenigstens einen Kupplungsaktor umfassen, der durch die Steuereinrichtung in Abhängigkeit des erfassten Parameters steuerbar ist und der zur Bewegung wenigstens eines mechanischen Elements der Kupplungseinrichtung, durch das die Verteilwelle und das Planetengetriebe koppelbar sind, ausgebildet ist. Abhängig von den konkreten Anforderungen an die Kupplungseinrichtung im aktiven Differential kann eine derartige steuerbare mechanische Kopplung in der Kupplungseinrichtung vorteilhaft sein. Dabei kann der Kupplungsaktor insbesondere die Lamellen einer Lamellenkupplung bewegen.

Wie eingangs erwähnt ist es vorteilhaft möglich, das die Kupplungseinrichtung selbst mechanisch so ausgebildet ist, dass bei Überschreiten eines vorgegebenen Grenzwerts durch einen Betriebsparameter des Differentials die Verteilwelle von dem Planetengetriebe getrennt wird, so dass zum Aufbau eines erfindungsgemäßen aktiven Differentials nicht notwendigerweise eine Steuereinrichtung notwendig ist. Dies kann erreicht werden, wenn die Kupplungseinrichtung eine Rutschkupplung ist oder eine Rutschkupplung umfasst. Die Rutschkupplung trennt dabei bei Anliegen eines definierten Drehmoments die Verteilwelle von dem Planetengetriebe. Das an einer Kupplungseinrichtung, die zwischen Verteilwelle und Planetengetriebe angeordnet ist, anliegende Drehmoment ist dabei proportional zur Abtriebsmomentdifferenz. Damit ist die Nutzung einer Rutschkupplung insbesondere vorteilhaft, wenn der Betriebsparameter die Abtriebsmomentdifferenz ist.

Die Rutschkupplung kann auf vielfältige Weise ausgebildet sein. Insbesondere kann die Rutschkupplung als Reibkupplung ausgebildet sein. Bei einer Reibkupplung erfolgt die Drehmomentübertragung kraftschlüssig. Wird eine durch die Ausbildung der Reibkupplung vorgegebenen Kraft überschritten, so können sich die Elemente der Reibkupplung relativ zueinander drehen und die Kupplung der Elemente ist aufgehoben. Eine solche Reibkupplung kann beispielsweise als Radialreibkupplung oder als Konuskupplung ausgebildet sein.

Alternativ wäre es möglich, die Rutschkupplung als hydrodynamische Kupplung auszubilden, bei der sich die Elemente, zwischen denen Drehmomente übertragen werden sollen, in einem viskosen Medium bewegen, das die Drehmomente überträgt. Bei einer hydrodynamischen Kupplung ist die der Anteil des Drehmoments, der übertragen wird, abhängig vom Drehmoment, das an der hydrodynamische Kupplung anliegt.

Alternativ können Rutschkupplungen auch durch formschlüssige Kraftübertragung erreicht werden, wobei die formschlüssig eingreifenden Teile der Rutschkupplung derart gelagert sind, dass die formschlüssige Kupplung bei Überschreiten eines vorgegebenen Drehmoments aufgehoben wird. Derartige Lagerungen sind beispielsweise möglich, indem an Federn gelagerte Kugeln oder Wippen als formschlüssig eingreifende Elemente genutzt werden.

Die Kupplungseinrichtung kann in einer nicht erfindungsgemäßen Alternative eine Fliehkraftkupplung sein oder eine Fliehkraftkupplung umfassen. Im erfindungsgemäßen aktiven Differential kann die Fliehkraftkupplung insbesondere derart ausgebildet sein, dass bei Überschreiten einer Drehzahl der Verbindungswelle die Kopplung zwischen Verteilwelle und Planetengetriebe getrennt wird. Die grundlegende Ausbildung von Fliehkraftkupplungen ist im Stand der Technik bekannt und soll hier nicht näher erläutert werden.

Die verschiedenen Ausbildungen des erfindungsgemäßen aktiven Differentials können durch den Fachmann in vielfältiger Weise kombiniert werden. So kann die Kupplungseinrichtung beispielsweise eine Fliehkraftkupplung und eine Rutschkupplung umfassen, um sowohl bei Überschreiten eines vorgegebenen Grenzwerts für die Drehzahl der Verteilwelle als auch bei Überschreiten eines vorgegebenen Grenzwerts durch das vom Planetengetriebe auf die Verteilwelle übertragene Drehmoment die Verteilwelle vom Planetengetriebe zu trennen. Insbesondere bei Nutzung einer Steuereinrichtung können eine Vielzahl verschiedener Betriebsparameter ausgewertet werden und in Abhängigkeit dieser Betriebsparameter die Trennung der Verteilwelle vom Planetengetriebe erfolgen.

Des Weiteren betrifft die Erfindung ein Kraftfahrzeug, das ein Differential gemäß einer der obig beschriebenen Ausführungsformen umfasst. Wie eingangs erläutert ist es insbesondere bei der Nutzung eines aktiven Differentials im Kraftfahrzeug möglich, dass plötzlich große Drehzahldifferenzen oder Abtriebsmomentdifferenzen auftreten, die zu einer Beschädigung von Komponenten des Differentials führen können. Daher ist es vorteilhaft, ein erfindungsgemäßes Differential zu nutzen, bei dem bei Überschreiten eines vorgegebenen Grenzwerts durch ein Betriebsparameter die Verteilwelle von dem Planetengetriebe getrennt wird.

Dabei können die Abtriebswellen insbesondere je mit einem Rad des Kraftfahrzeugs gekoppelt sein.

Weitere Vorteile und Einzelheiten der Erfindung ergeben sich aus den folgenden Ausführungsbeispielen sowie den zugehörigen Zeichnungen. Dabei zeigen:
- Fig. 1: schematisch ein Ausführungsbeispiel des erfindungsgemäßen aktiven Differentials,
- Fig. 2: schematisch ein weiteres Ausführungsbeispiel eines erfindungsgemäßen aktiven Differentials, und
- Fig. 3: ein Ausführungsbeispiel eines erfindungsgemäßen Kraftfahrzeugs.

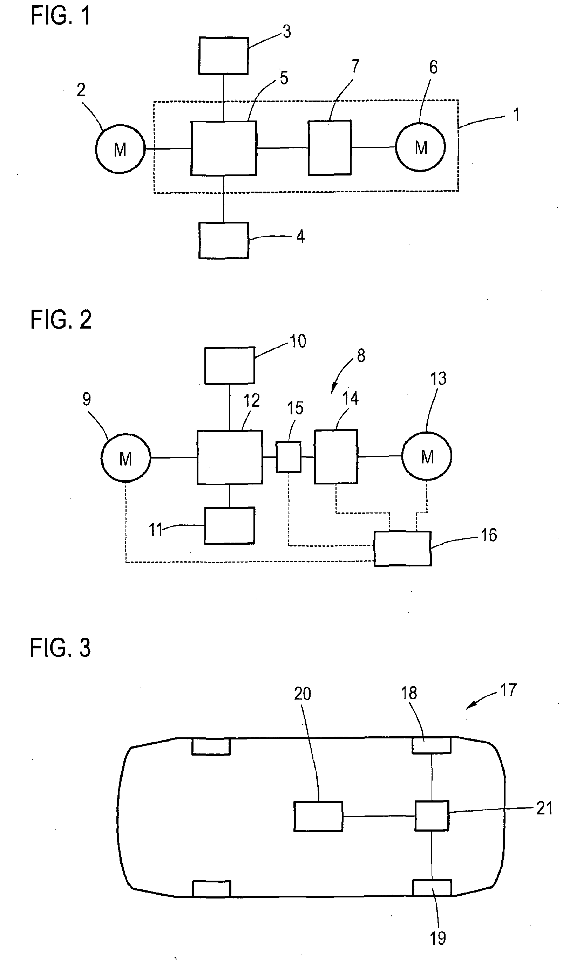

Fig. 1 zeigt ein Ausführungsbeispiel eines aktiven Differentials 1 zur gesteuerten Verteilung eines durch einen Antriebsmotor 2 erzeugten Antriebsmoments auf zwei Abtriebswellen 3, 4. Die Kopplung des Antriebsmotors 2 und der Antriebswelle an die Abtriebswellen 3, 4 erfolgt durch das Planetengetriebe 5 des Differentials 1. Neben dem Planetengetriebe 5 umfasst das Differential 1 einen Verteilmotor 6, wobei die Verteilung des Antriebsmoments auf die Abtriebswellen 3, 4 abhängig von dem durch den Verteilmotor 6 ausgeübten Drehmoment ist. Der Verteilmotor 6 ist dabei über eine Verteilwelle mit der Kupplungseinrichtung 7 gekoppelt, die wiederum mit dem Planetengetriebe 5 gekoppelt ist. Trennt die Kupplungseinrichtung 7 die vom Verteilmotor 6 kommenden Verteilwelle vom Planetengetriebe 5, so hat das Differential 1 das Verhalten eines nicht gesperrten Differentials, so dass das durch den Antriebsmotor 2 erzeugte Drehmoment gleichmäßig auf die Abtriebswellen 3 und 4 verteilt wird. Ist die vom Verteilmotor 6 kommende Verteilwelle durch die Kupplungseinrichtung 7 mit dem Planetengetriebe 5 verbunden, so steuert das Drehmoment des Verteilmotors 6 die Verteilung des Antriebsmoments auf die Abtriebswellen 3 und 4.

Typischerweise ist ein gesteuerter Betrieb des Differentials 1 gewünscht, so dass die Kupplungseinrichtung 7 im normalen Betriebszustand des Differentials 1 die vom Verteilmotor 6 kommende Verteilwelle mit dem Planetengetriebe 5 verbindet. Die Kupplungseinrichtung 7 ist jedoch derart ausgebildet, dass bei Überschreiten eines vorgegebenen Grenzwerts durch einen Betriebsparameter des Differentials 1 die Verteilwelle von dem Planetengetriebe getrennt wird. Dabei soll im Ausführungsbeispiel keine separate Steuereinrichtung für die Kupplungseinrichtung vorgesehen sein, sondern die Kupplungseinrichtung soll rein mechanisch derart aufgebaut sein, dass sowohl bei Überschreiten einer Drehzahldifferenz zwischen der Drehzahlen der Abtriebswellen 3, 4 als auch bei Überschreiten einer vorgegebenen Abtriebsmomentdifferenz zwischen den von den Abtriebswellen 3, 4 auf das Planetengetriebe 5 übertragenen Drehmomenten eine Trennung der Verteilwelle vom Planetengetriebe 5 erfolgt. Hierzu umfasst die Kupplungseinrichtung 7 eine Rutschkupplung und eine Fliehkraftkupplung. Dabei ist es insbesondere möglich, dass die Fliehkraftkupplung so ausgebildet ist, dass die Kraftübertragung bei verbundener Fliehkraftkupplung kraftschlüssig erfolgt und die Fliehkraftkupplung somit zugleich als Rutschkupplung dient, die bei Überschreiten eines vorgegebenen Drehmoments die Verteilwelle vom Planetengetriebe entkoppelt.

Fig. 2 zeigt ein weiteres Ausführungsbeispiel eines aktiven Differentials. Das aktive Differential 8 ist dabei im Wesentlichen aufgebaut wie das in Fig. 1 gezeigte Differential 1, wobei es sich von dem in Fig. 1 gezeigten Differential 1 durch die Ausbildung der Kupplungseinrichtung 14 sowie durch die Nutzung eines zusätzlichen Sensors 15 und der Steuereinrichtung 16 unterscheidet. Wie in dem in Fig. 1 gezeigten Differential 1 wird auch in Fig. 2 durch das Planetengetriebe 12 des Differentials 1 ein Antriebsmoment des Motors 9 auf die Abtriebswellen 10 und 11 verteilt. Dabei ist der Verteilmotor 13 über die Verteilwelle und die Kupplungseinrichtung 14 mit dem Planetengetriebe 12 gekoppelt. Zwischen Planetengetriebe 12 und Kupplungseinrichtung 14 ist zudem ein Sensor 15 angeordnet, der sowohl die Drehzahl der Welle zwischen Planetengetriebe 12 und Kupplungseinrichtung 14 als auch das durch die Welle übertragene Drehmoment erfasst. Die vom Sensor erfassten Daten werden der Steuereinrichtung 16 zur Verfügung gestellt. Die Steuereinrichtung 16 steuert dabei abhängig von den durch Sensor 15 erfassten Daten sowie weiteren im Kraftfahrzeug vorhandenen Daten den Antriebsmotor 9, den Verteilmotor 13 sowie die Kupplungseinrichtung 14.

Die Kupplungseinrichtung 14 ist hierbei als Magnetkupplung ausgebildet, die in Abhängigkeit eines Steuersignals der Steuereinrichtung 16 die Verteilwelle mit dem Planetengetriebe 12 verbindet oder nicht. Die Steuereinrichtung 16 erfasst zur Steuerung der Kupplungseinrichtung sowohl das vom Sensor 15 erfasste Drehmoment als auch die vom Sensor 15 erfasste Drehzahl. Zudem werden in der Steuereinrichtung 16 die Zeitableitungen dieser Größen berechnet. Für jeden dieser Werte, also das Drehmoment, die Zeitableitung des Drehmoments, die Drehzahl und die Zeitableitung der Drehzahl sind in der Steuereinrichtung 16 Grenzwerte gespeichert. Übersteigt einer dieser Werte den zugehörigen Grenzwert, so wird durch die Gabe eines Steuersignals an die Kupplungseinrichtung 14 die Kopplung zwischen der Verteilwelle und dem Planetengetriebe 12 getrennt.

Fig. 3 zeigt ein Ausführungsbeispiel eines Kraftfahrzeugs, das ein aktives Differential umfasst. Das Kraftfahrzeug 17 weist einen Hinterradantrieb auf, wobei die Hinterräder 18, 19 durch den Antriebsmotor 20 betrieben werden.

Die Verteilung des durch den Antriebsmotor 20 bereitgestellten Antriebsmomements auf die Räder 18, 19 erfolgt durch das aktive Differential 21. Das aktive Differential 21 ist entsprechend dem in Fig. 1 gezeigten Differential 1 aufgebaut. Alternativ wäre selbstverständlich auch ein Aufbau des Differentials 21 entsprechend dem in Fig. 2 gezeigten Differential 8 möglich.

## Patentansprüche

1. Aktives Differential zur gesteuerten Verteilung eines durch einen Antriebsmotor (2, 9, 20) erzeugten Antriebsmoments auf zwei Abtriebswellen (3, 4, 10, 11), umfassend ein Planetengetriebe (5, 12) zur Kopplung der Abtriebswellen (3, 4, 10, 11) mit einer Antriebswelle des Antriebsmotors (2,9, 20) und einer Verteilwelle eines Verteilmotors (6, 13), wobei die Verteilung des Antriebsmoments auf die Abtriebswellen (3, 4, 10, 11) abhängig von einem durch den Verteilmotor (6, 13) ausgeübten Drehmoment ist, wobei die Verteilwelle und das Planetengetriebe (5, 12) durch eine trennbare Kupplungseinrichtung (7, 14) gekoppelt sind, wobei die Kupplungseinrichtung (7, 14) ausgebildet ist, bei Überschreiten eines vorgegebenen Grenzwertes durch einen Betriebsparameter des Differentials (1, 8, 21) die Verteilwelle von dem Planetengetriebe (5, 12) zu trennen,
**dadurch gekennzeichnet,**
**dass** der Betriebsparameter eine Abtriebsmomentdifferenz zwischen den von den Abtriebswellen (3, 4, 10, 11) auf das Planetengetriebe (5, 12) übertragenen Drehmomenten oder eine zeitliche Ableitung der besagten Abtriebsmomentdifferenz ist.

2. Differential nach Anspruch 1,
**dadurch gekennzeichnet,**
**dass** das Differential (1, 8, 21) einen Sensor (15) zur Erfassung des Parameters und eine Steuereinrichtung (16) umfasst, wobei die Kupplungseinrichtung (7, 14) in Abhängigkeit des erfassten Parameters durch die Steuereinrichtung (16) zur Trennung und Verbindung der Kopplung zwischen der Verteilwelle und dem Planetengetriebe (5, 12) steuerbar ist.

3. Differential nach Anspruch 2,
**dadurch gekennzeichnet,**
**dass** die Kupplungseinrichtung (7, 14) eine Magnetkupplung ist oder eine Magnetkupplung umfasst, wobei wenigstens ein Magnet der Magnetkupplung durch die Steuereinrichtung (16) in Abhängigkeit des erfassten Parameters steuerbar ist.

4. Differential nach Anspruch 2,
**dadurch gekennzeichnet,**
**dass** die Kupplungseinrichtung (7, 14) wenigstens einen Kupplungsaktor umfasst, der durch die Steuereinrichtung (16) in Abhängigkeit des erfassten Parameters steuerbar ist und der zur Bewegung wenigstens eines mechanischen Elements der Kupplungseinrichtung (7, 14), durch das die Verteilwelle und das Planetengetriebe (5, 12) koppelbar sind, ausgebildet ist.

5. Differential nach Anspruch 1 oder 2,
**dadurch gekennzeichnet,**
**dass** die Kupplungseinrichtung (7, 14) eine Rutschkupplung ist oder eine Rutschkupplung umfasst.

6. Kraftfahrzeug,
**dadurch gekennzeichnet,**
**dass** es ein Differential (1, 8, 21) nach einem der vorangehenden Ansprüche umfasst.

7. Kraftfahrzeug nach Anspruch 6,
**dadurch gekennzeichnet,**
**dass** die Abtriebswellen (3, 4, 10, 11) je mit einem Rad (18, 19) des Kraftfahrzeugs (17) gekoppelt sind.

## Claims

1. Active differential for the controlled distribution of a drive torque generated by a drive motor (2, 9, 20) to two output shafts (3, 4, 10, 11), comprising a planetary gear (5, 12) for coupling the output shafts (3, 4, 10, 11) to a drive shaft of the drive motor (2, 9, 20) and a distributor shaft of a distributor motor (6, 13), wherein the distribution of the drive torque to the output shafts (3, 4, 10, 11) is dependent on a torque produced by the distributor motor (6, 13), wherein the distributor shaft and the planetary gear (5, 12) are coupled by a separable coupling apparatus (7, 14), wherein the coupling apparatus (7, 14) is designed when a predetermined limit value is exceeded by an operating parameter of the differential (1, 8, 21) to separate the distributor shaft from the planetary gear (5, 12),
**characterised in**
**that** the operating parameter is an output torque difference between the torques transmitted by the output shafts (3, 4, 10, 11) to the planetary gear (5, 12) or a time derivative of the said output torque difference.

2. Differential according to claim 1,
**characterised in**
**that** the differential (1, 8, 21) comprises a sensor (15) for detecting the parameter and a control apparatus (16), wherein the coupling apparatus (7, 14) can be controlled as a function of the detected parameter by the control apparatus (16) for separating and connecting the coupling between the distributor shaft and the planetary gear (5, 12).

3. Differential according to claim 2,
**characterised in**
**that** the coupling apparatus (7, 14) is a magnetic clutch or comprises a magnetic clutch, wherein at least one magnet of the magnetic clutch can be controlled by the control apparatus (16) as a function of the detected parameter.

4. Differential according to claim 2,
**characterised in**
**that** the coupling apparatus (7, 14) comprises at least one coupling actuator, which is controllable by the control apparatus (16) as a function of the detected parameter and which is configured for moving at least one mechanical element of the coupling apparatus (7, 14) by means of which element the distributor shaft and the planetary gear (5, 12) can be coupled.

5. Differential according to claim 1 or 2,
**characterised in**
**that** the coupling apparatus (7, 14) is a slip clutch or comprises a slip clutch.

6. Motor vehicle
**characterised in**
**that** it comprises a differential (1, 8, 21) according to any of the preceding claims.

7. Motor vehicle according to claim 6,
**characterised in**
**that** the output shafts (3, 4, 10, 11) are coupled respectively to a wheel (18, 19) of motor vehicle (17).

## Revendications

1. Différentiel actif pour la distribution commandée d'un couple d'entraînement généré par un moteur d'entraînement (2, 9, 20) à deux arbres de sortie (3, 4, 10, 11), comprenant un engrenage planétaire (5, 12) pour accoupler les arbres de sortie (3, 4, 10, 11) à un arbre d'entraînement du moteur d'entraînement (2, 9, 20) et à un arbre de distribution d'un moteur de distribution (6, 13), dans lequel la distribution du couple d'entraînement aux arbres de sortie (3, 4, 10, 11) est commandée par le différentiel actif en fonction d'un couple exercé par le moteur de distribution (6, 13), dans lequel l'arbre de distribution et l'engrenage planétaire (5, 12) sont accouplés par un dispositif d'accouplement (7, 14), dans lequel le dispositif d'accouplement (7, 14) est conçu pour séparer l'arbre de distribution de l'engrenage planétaire (5, 12) lorsqu'une valeur limite prédéterminée est dépassée par un paramètre de fonctionnement du différentiel (1, 8, 21),
**caractérisé en ce**
**que** le paramètre de fonctionnement est une différence de couple de sortie entre les couples transmis des arbres de sortie (3, 4, 10, 11) à l'engrenage planétaire (5, 12) ou une dérivée temporelle de ladite différence de couple de sortie.

2. Différentiel selon la revendication 1,
**caractérisé en ce**
**que** le différentiel (1, 8, 21) comprend un capteur (15) pour détecter le paramètre et un dispositif de commande (16), dans lequel le dispositif d'accouplement (7, 14) peut être commandé en fonction du paramètre détecté par le dispositif de commande (16) pour séparer et connecter l'accouplement entre l'arbre de distribution et l'engrenage planétaire (5, 12).

3. Différentiel selon la revendication 2,
**caractérisé en ce**
**que** le dispositif d'accouplement (7, 14) est un accouplement à aimant ou comprend un accouplement à aimant, dans lequel au moins un aimant de l'accouplement à aimant peut être commandé par le dispositif de commande (16) en fonction du paramètre détecté.

4. Différentiel selon la revendication 2,
**caractérisé en ce**
**que** le dispositif d'accouplement (7, 14) comprend au moins un actionneur d'accouplement qui peut être commandé par le dispositif de commande (16) en fonction du paramètre détecté et qui est conçu pour déplacer au moins un élément mécanique du dispositif d'accouplement (7, 14), au moyen duquel l'arbre de distribution et l'engrenage planétaire (5, 12) peuvent être accouplés.

5. Différentiel selon la revendication 1 ou 2,
**caractérisé en ce**
**que** le dispositif d'accouplement (7, 14) est un accouplement à friction ou comprend un accouplement à friction.

6. Véhicule automobile,
**caractérisé en ce**
**qu'**il comprend un différentiel (1, 8, 21) selon l'une quelconque des revendications précédentes.

7. Véhicule automobile selon la revendication 6,
**caractérisé en ce**
**que** les arbres de sortie (3, 4, 10, 11) sont chacun accouplés à une roue (18, 19) du véhicule automobile (17).
